# EUROPEAN PATENT APPLICATION

(11) **EP 4 209 910 A1**
(43) Date of publication of application: **12.07.2023**
(21) Application number: 21880300.5
(22) Date of filing: 26.08.2021
(51) Int. Cl.: G06F 11/14, G06F 9/30, G06F 9/46

(54) **ELECTRONIC DEVICE FOR MANAGING JOURNAL FILE AND OPERATION METHOD THEREOF**

(30) Priority: 12.10.2020 KR 20200130810
(71) Applicant: Samsung Electronics Co., Ltd., Suwon-si, Gyeonggi-do 16677 (KR)
(72) Inventor: LEE, Kisung, Suwon-si Gyeonggi-do 16677 (KR); SONG, Kiwon, Suwon-si Gyeonggi-do 16677 (KR); JUN, Hyeeun, Suwon-si Gyeonggi-do 16677 (KR)
(74) Representative: HGF
(86) International application number: PCT/KR2021/011430
(87) International publication number: WO 2022/080652

(57) **Abstract**

Disclosed is an electronic device comprising: a storage for storing a database, a journal file for the database, and instructions; and a processor electrically connected to a memory, wherein the instructions are configured to cause, when executed by the processor, the electronic device to: record a processing result of a transaction in the journal file through a thread of a process related to the database; identify a size of the journal file through the thread; on the basis of a result of the identification, lock the journal file for a reference time period through the thread; and when the journal file is successfully locked, transfer the processing result of the transaction, which has been recorded in the journal file, to the database through the thread. Various other embodiments identified through the specification are also possible.

## Description

### [Technical Field]

Embodiments of the disclosure relate to an electronic device for managing a journal file and an operation method thereof.

### [Background Art]

Recently, various technologies for managing and operating pieces of data associated with an application executed on an electronic device have been developed. For example, a data base (DB) management system, which configures a DB including the pieces of data associated with the application as at least one file and manages it in the electronic device, has been developed. Meanwhile, for the application to be correctly executed in the electronic device, there is a need to protect data included in the DB, require data integrity for maintaining data, which is always normal, in the DB, and ensure atomicity of a transaction for the DB. Herein, the atomicity means that the results of all calculations associated with one transaction are all reflected in the DB or are not reflected at all in the DB.

When the application operates the DB in a write ahead logging (WAL) mode, the transaction for the DB may first be recorded in a WAL file. When a certain condition is met, transactions recorded in the WAL file may be transferred to the DB. The operation of transferring the transactions recorded in the WAL file to the DB may be referred to as a checkpoint.

### [Disclosure]

### [Technical Problem]

When a checkpoint is not performed, the size of a WAL file may continue to increase. As the size of the WAL file continue to increase, it may result in the waste of a memory (e.g., storage) of an electronic device, and an access speed may be degraded when an application accesses a DB. Thus, there is a need for a method for suitably performing the checkpoint.

### [Technical Solution]

In accordance with an aspect of the disclosure, an electronic device is provided. The electronic device may include a memory storing a database, a journal file for the database, and instructions and a processor electrically connected with the memory. The instructions may be configured to, when executed by the processor, cause the electronic device to record the result of processing a transaction in the journal file through a thread of a process associated with the database, identify a size of the journal file through the thread, perform a lock for the journal file during a reference time through the thread, based on the identified result, and transfer the result of processing the transaction, the result being recorded in the journal file, to the database through the thread, in response to success of the lock for the journal file.

In accordance with another aspect of the disclosure, an operation method of an electronic device is provided. The operation method may include recording the result of processing a transaction in a journal file for a database of the electronic device through a thread of a process associated with the database, identifying a size of the journal file through the thread, performing a lock for the journal file during a reference time through the thread, based on the identified result, and transferring the result of processing the transaction, the result being recorded in the journal file, to the database through the thread, in response to success of the lock for the journal file.

The technical problems to be solved by the disclosure are not limited to the aforementioned problems, and any other technical problems not mentioned herein will be clearly understood from the following description by those skilled in the art to which the disclosure pertains.

### [Advantageous Effects]

The electronic device and the operation method thereof according to an embodiment of the disclosure may prevent the performance of a checkpoint from being delayed or failing, thus preventing the size of a WAL file from continuing to increase.

The effects that are achieved through various embodiments of the disclosure may not be limited to what has been particularly described herein, and other advantages not described herein may be more clearly understood from the following detailed description by persons skilled in the art.

### [Description of Drawings]

FIG. 1 is a block diagram illustrating an electronic device in a network environment according to an embodiment;
FIG. 2 is a block diagram illustrating a program according to an embodiment;
FIG. 3 is a block diagram of an electronic device according to an embodiment;
FIG. 4 is a drawing for describing at least one file associated with a database stored in an electronic device according to an embodiment;
FIG. 5 is a drawing illustrating a structure of a WAL file of an electronic device according to an embodiment;
FIG. 6 is a flowchart illustrating a checkpoint operation of an electronic device according to an embodiment;
FIG. 7 is a detailed flowchart of a checkpoint operation according to an embodiment;
FIG. 8 is a flowchart illustrating a checkpoint guarantee reinforcement operation according to an embodiment;
FIG. 9 is a flowchart illustrating a checkpoint guarantee reinforcement operation according to an embodiment;
FIG. 10 is a flowchart illustrating a checkpoint guarantee reinforcement operation according to an embodiment;
FIG. 11 is a flowchart illustrating a checkpoint guarantee reinforcement operation according to an embodiment;
FIG. 12 is a flowchart illustrating a checkpoint operation according to an available capacity of a memory of an electronic device according to an embodiment; and
FIG. 13 is a flowchart illustrating a checkpoint operation according to an available capacity of a memory of an electronic device according to an embodiment.

With regard to description of drawings, the same or similar denotations may be used for the same or similar components.

### [Mode for Invention]

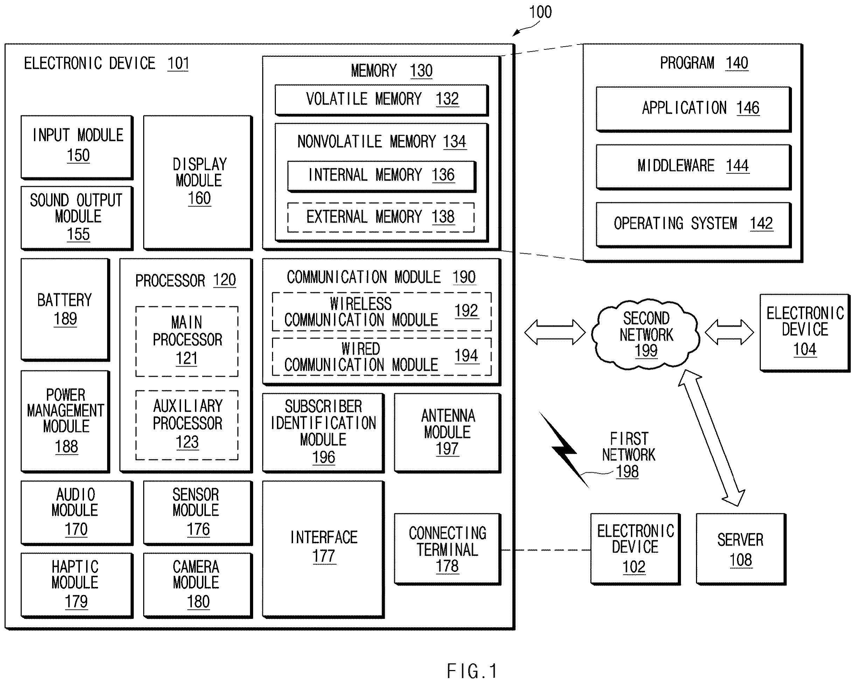

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

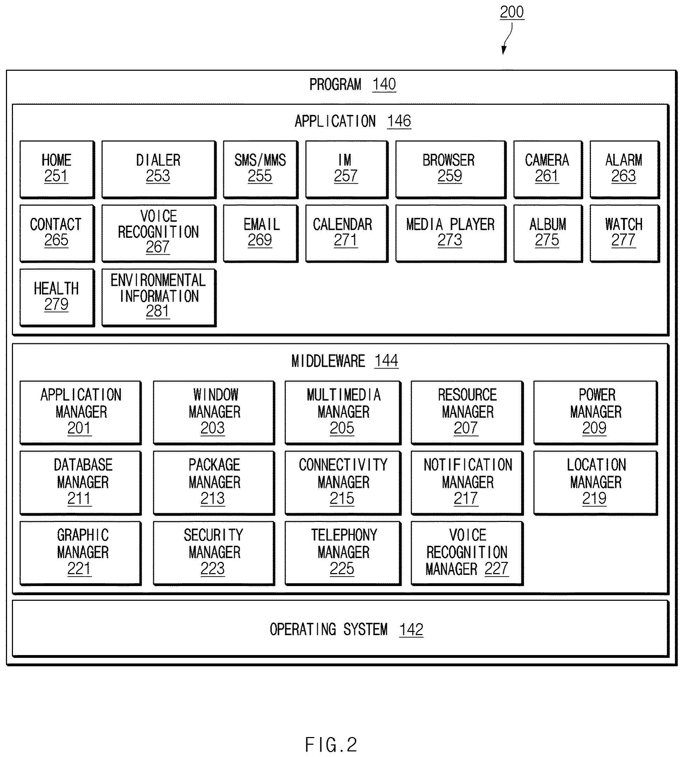

FIG. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, Android^{™}, iOS^{™}, Windows^{™}, Symbian^{™}, Tizen^{™}, or Bada^{™}. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input device 150, the sound output device 155, the display device 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display device or a camera module of the external electronic device). The device management application, additionally or alternatively, may support installation, delete, or update of an application running on the external electronic device.

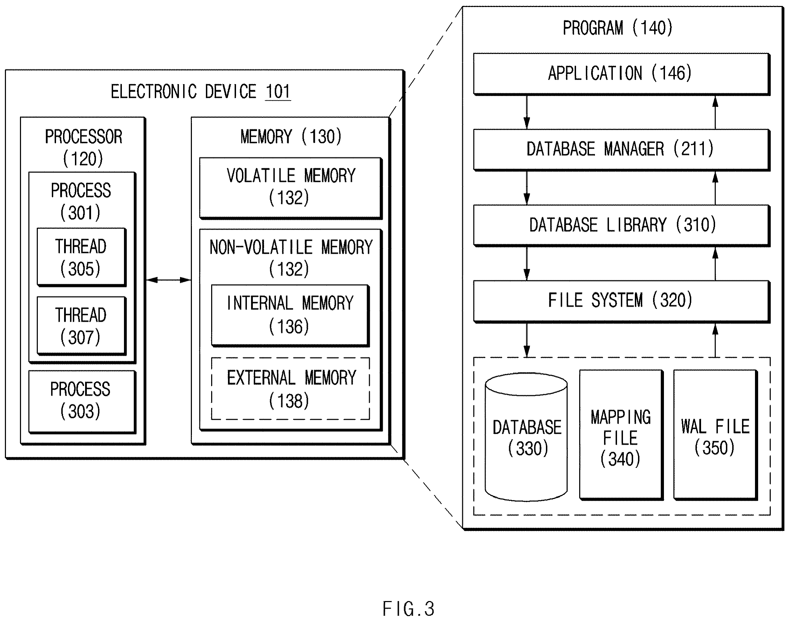

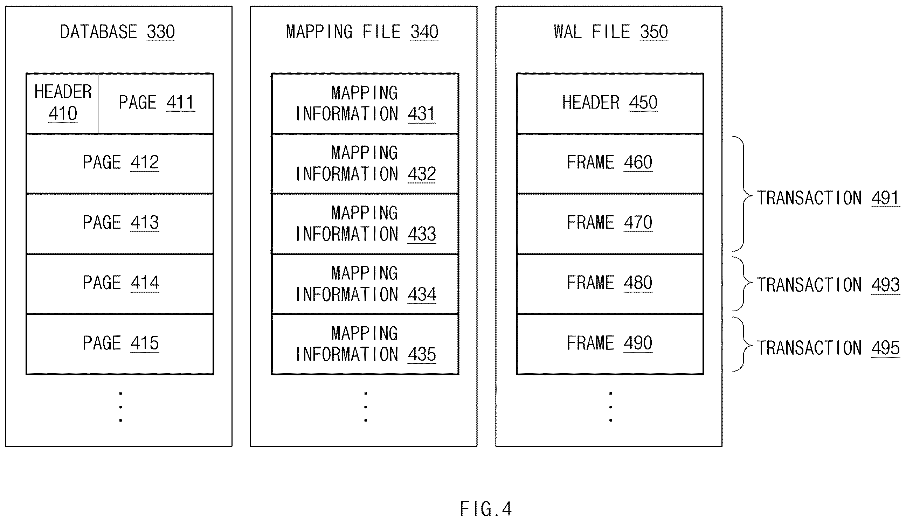

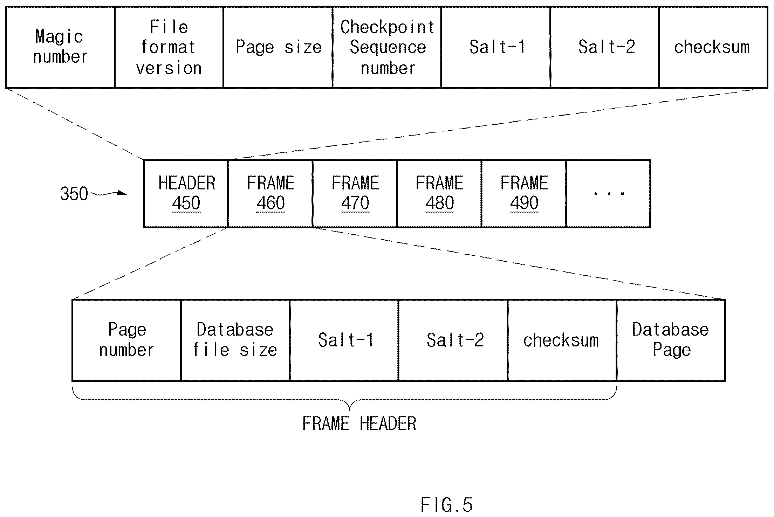

FIG. 3 is a block diagram of an electronic device 101 according to an embodiment. FIG. 4 is a drawing for describing at least one file 340 and/or 350 associated with a database 330 stored in an electronic device 101 according to an embodiment. FIG. 5 is a drawing illustrating a structure of a write ahead logging (WAL) file 350 of an electronic device 101 according to an embodiment.

In an embodiment, the electronic device 101 may correspond to an electronic device 101 of FIG. 1.

In an embodiment, the electronic device 101 may include a processor 120 and a memory 130. In an embodiment, the processor 120 may correspond to a processor 120 of FIG. 1. In an embodiment, the memory 130 may correspond to a memory 130 of FIG. 1.

In an embodiment, the memory 130 may include a volatile memory 132 and a non-volatile memory 134. In an embodiment, the non-volatile memory 134 may be divided into an internal memory 136 and an external memory 138. In an embodiment, the volatile memory 132, the non-volatile memory 134, the internal memory 136, and the external memory 138 may correspond to a volatile memory 132, a non-volatile memory 134, an internal memory 136, and an external memory 138 of FIG. 1, respectively.

In an embodiment, a program 146 may be stored in the memory 130. In an embodiment, the program 146 may include an application 146, a database manager 211, a database library 310, a file system 320, a database 330, a mapping file 340, a WAL file 350, or a combination thereof. In an embodiment, the program 146 may correspond to a program 146 of FIG. 1 and/or FIG. 2. In an embodiment, the application 146 may correspond to an application 146 of FIG. 1 and/or FIG. 2. In an embodiment, the database manager 211 may correspond to a database manager 211 of FIG. 2.

In an embodiment, the database manager 211 and the database library 310 may provide a function for performing processing of data between the application 146 and the database 330. In an embodiment, the database manager 211 and the database library 310 may be included in middleware (e.g., middleware 144 of FIG. 1 and/or FIG. 2).

in an embodiment, the file system 320 may perform a function which provides a system for managing unit data. In an embodiment, the application 146 may access data included in the database 330 through the file system 320.

In an embodiment, the database 330 may be stored in storage (e.g., the non-volatile memory 134) among components of the memory 130. In an embodiment, the database 330 may be a set of systemized data. In an embodiment, an extension of the database 330 may be ".db", ".sqlite", or ".sqlite3". However, the extension of the database 330 is not limited thereto.

In an embodiment, the database 330 may manage data in units of pages. In an embodiment, the page may have a specified size (e.g., 4 kilo bytes (KB)). In an embodiment, the size of the page is configurable.

In an embodiment, referring to FIG. 4, an initial page 411 among a plurality of pages 411, 412, 413, 414, and 415 included in the database 330 may be composed of a header 410 and a schema. In an embodiment, the schema may be data defining a data structure, a representation method, and a relationship in the database 330.

In an embodiment, the mapping file 340 may include pieces of mapping information 431, 432, 433, 434, and 435 between the pages 412, 413, 414, and 415 of the database 330 and frames 460, 470, 480, and 490 of the WAL file 350. In an embodiment, the mapping file 340 may be generated when the database 330 operates in a specified journal mode (e.g., a WAL mode). In an embodiment, the mapping file 340 may be omitted when an exclusive locking mode is set. In an embodiment, an extension of the mapping file 340 may be ".shm". However, the extension of the mapping file 340 is not limited to ".shm".

In an embodiment, the mapping file 340 may include a parameter (e.g., lock information) for partially preventing simultaneous access to the database 330. In an embodiment, the simultaneous access to the database 330 may be performed by at least two processes 301 and 303 of the application 146 associated with the database 330. In an embodiment, the simultaneous access to the database 330 may be performed by at least two threads 305 and 307 in the process 303 of the application 146 associated with the database 330. However, the above simultaneous access is merely illustrative, and another type of simultaneous access may be present.

In an embodiment, the WAL file 350 may be a journal file. In an embodiment, the WAL file 350 may record transactions 491, 493, and 495 which are committed, but are not applied (or reflected) to (or in) the database 330. In an embodiment, the WAL file 350 may be generated when the database 330 operates in the specified journal mode (e.g., the WAL mode). In an embodiment, an extension of the WAL file 350 may be ".wal". However, the extension of the WAL file 350 is not limited to ".wal".

In an embodiment, referring to FIG. 5, the WAL file 350 may be composed of a header 450 and frames 460, 470, 480, and 490.

In an embodiment, the header 450 may be composed of "Magic number", "File format version", "Page size", "Checkpoint Sequence number", "Salt-1", "Salt-2", and "checksum" fields.

In an embodiment, the "Magic number" field may be specified size (e.g., 4-byte) information used to recognize the WAL file 350. In an embodiment, the "File format version" field may be specified size (e.g., 4-byte) information for indicating a file format version of the WAL file 350. In an embodiment, the "Page size" field may be specified size (e.g., 4-byte) information for indicating a size of a page (or chunk) of the database 330. In an embodiment, the "Checkpoint Sequence number" field may be specified size (e.g., 4-byte) information for indicating the number of checkpoints. In an embodiment, the "Salt-1" field may be specified size (e.g., 4-byte) information for indicating a number which increases by any number for each checkpoint. In an embodiment, the "Salt-2" field may be specified size (e.g., 4-byte) information for indicating another any number for each checkpoint. In an embodiment, a normal frame among the frames 460, 470, 480, and 490 may be identified based on "Salt-1" and "Salt-2". In an embodiment, the "checksum" field may be specified size (e.g., 8-byte) information for checking an error in the WAL file 350.

In an embodiment, each of the frames 460, 470, 480, and 490 may be composed of a frame header and a database page. In an embodiment, the frame header may be composed of "Page number", "Database file size", "Salt-1", "Salt-2", and "checksum" fields.

In an embodiment, the "Page number" field may indicate a number of a related page among the plurality of pages 411, 412, 413, 414, and 415 included in the database 330. In an embodiment, the "Database file size" field may indicate a size (a page unit) of the database 330 after a commit for the purpose of recording the commit. In an embodiment, the "Salt-1" or "Salt-2" field may have a value copied from "Salt-1" or "Salt-2" of the header 450. In an embodiment, the "checksum" field may be information for checking an error in frame.

Hereinafter, a description will be given of an operation of the electronic device 101 according to an embodiment with reference to FIGS. 3, 4, and 5.

In an embodiment, the processor 120 may generate the process 301 for executing the application 146. In an embodiment, referring to FIG. 3, it is illustrated that the process 301 is included in the processor 120, but the process 301 may be included in the memory 130 to be executed by the processor 120. For example, the process 301 may be included in the non-volatile memory 134 and may be loaded into the volatile memory 132 when executed and may be executed by the processor 120.

In an embodiment, the thread 305 of the process 301 of the application 146 may open the database 330 associated with the application 146 to execute a function of the application 146. In an embodiment, a lock state of the thread 305 for the database 330 may be none.

In an embodiment, the thread 305 may generate a write transaction 491 for the database 330. In an embodiment, the write transaction 491 may be a transaction for correcting the page 413 and the page 415 of the database 330. In an embodiment, a lock state of the thread 305 for the database 330 may be reserved.

In an embodiment, the thread 305 may record the frame 460 indicating corrections for the page 413 and the frame 470 indicating corrections for the page 415 in the WAL file 350 based on the write transaction 491. In an embodiment, a lock state of the thread 305 for the database 330 may be WAL write lock.

In an embodiment, when a new frame is appended to the WAL file 350, the mapping information 431 between the page 413 of the database 330 and the frame 460 of the WAL file 350 and the mapping information 432 between the page 415 of the database 330 and the frame 470 of the WAL file 350 may be recorded in the mapping file 340.

In an embodiment, when ending the write transaction 491, the thread 305 may determine whether to execute a checkpoint operation. In an embodiment, the checkpoint may refer to reflecting frames of the WAL file 350 in the database 330.

In an embodiment, when a specified condition for executing the checkpoint operation is not met, the thread 305 may fail to perform the checkpoint.

Thereafter, the new frames 480 and 490 may be appended to the WAL file 350 by additional write transactions 493 and 495. In an embodiment, the write transaction 493 may indicate corrections for the page 413. In an embodiment, the write transaction 495 may indicate corrections for the page 414.

In an embodiment, after ending any transaction (e.g., a write transaction and/or a read transaction), the thread 305 may identify whether the specified condition for executing the checkpoint operation is met.

In an embodiment, when the ended transaction is the write transaction, the thread 305 may identify that the specified condition for executing the checkpoint operation is met.

In an embodiment, when there is no another transaction, the thread 305 may identify that the specified condition for executing the checkpoint operation is met. In an embodiment, when there is no transaction of the other process 303 associated with the database 330 or there is no transaction of the other thread 307, the thread 305 may identify that the specified condition for executing the checkpoint operation is met.

In an embodiment, when the size of the WAL file 350 is greater than a specified threshold size (e.g., 1 megabyte (MB)), the thread 305 may identify that the specified condition for executing the checkpoint operation is met.

In an embodiment, when the available capacity of the memory 130 is less than or equal to a specified capacity, the thread 305 may identify that the specified condition for executing the checkpoint operation is met. In an embodiment, when the rate of the available capacity of the memory 130 is less than or equal to a specified rate, the thread 305 may identify that the specified condition for executing the checkpoint operation is met.

In an embodiment, when one of the conditions is met, the thread 305 may identify that the specified condition for executing the checkpoint operation is met. In an embodiment, when a specified number of conditions or more among the conditions are met, the thread 305 may identify that the specified condition for executing the checkpoint operation is met.

In an embodiment, when the specified condition for executing the checkpoint operation is met, the thread 305 may perform an attempt to obtain a lock of the database 330. In an embodiment, the thread 305 may perform the attempt to obtain the lock of the database 330 during a specified time (e.g., 100 milliseconds (msec)). In an embodiment, the lock for the checkpoint operation may be an exclusive lock.

In an embodiment, when another entity (e.g., the thread 307 or the process 303) releases any lock (e.g., a shared lock, an exclusive lock, a WAL write lock, a reservation lock, or a pending lock) for the database 330, the thread 305 may obtain the lock of the database 330. In an embodiment, when the other entity (e.g., the thread 307 or the process 303) does not release any lock for the database 330, the thread 305 may fail to obtain the lock of the database 330.

In an embodiment, when obtaining the lock of the database 330, the thread 305 may perform a checkpoint. In an embodiment, the thread 305 may perform a checkpoint (e.g., truncate) such that the size of the WAL file 350 is less than or equal to a specified size. For example, the thread 305 may perform a checkpoint (e.g., zero truncate) such that the size of the WAL file 350 is 0 byte. For example, the thread(305) may increase the available capacity of the memory 130 (e.g., storage) compared to when the size of the WAL file 350 is not 0 byte by performing the checkpoint (e.g., the zero truncate) such that the size of the WAL file 350 is 0 byte.

In an embodiment, when the checkpoint is successfully completed, the thread 305 may initialize parameters (e.g., a reference time and the number of failures).

In an embodiment, when the checkpoint is not successfully completed, the thread 305 may perform logic for reinforcing success in checkpoint.

In an embodiment, when not obtaining the lock of the database 330, the thread 305 may perform the logic for reinforcing the success in checkpoint.

In an embodiment, when the size of the WAL file 350 is greater than a first threshold size (e.g., 1 gigabyte (GB), the threshold 305 may increase a time to perform an attempt to obtain a lock. In an embodiment, when the size of the WAL file 350 is greater than the first threshold size, the threshold 305 may increase the time to perform the attempt to obtain the lock by a reference time (e.g., 100 msec).

In an embodiment, when the number of failures of the checkpoint is greater than a threshold number (e.g., 100 times), the thread 305 may increase the time to perform the attempt to obtain the lock. In an embodiment, when the number of the failures of the checkpoint is greater than the threshold number, the thread 305 may increase the time to perform the attempt to obtain the lock by the reference time (e.g., 100 msec).

In an embodiment, when the number of the failures of the checkpoint is greater than the threshold number (e.g., 100 times), the thread 305 may increase the time to perform the attempt to obtain the lock. In an embodiment, when the number of the failures of the checkpoint is greater than the threshold number, the thread 305 may increase the time to perform the attempt to obtain the lock by the reference time (e.g., 100 msec).

In an embodiment, when the checkpoint fails and when the size of the WAL file 350 is greater than a second threshold size (e.g., 100 MB), the threshold 305 may increase the number of the failures of the checkpoint.

In an embodiment, the thread 305 may perform a checkpoint in the background through a background thread. In an embodiment, when the number of the failures of the checkpoint is greater than the threshold number, the thread 305 may perform the checkpoint in the background through the background thread.

In an embodiment, the background thread may identify a checkpoint state. In an embodiment, the background thread may identify whether the checkpoint is performed for the database 330 by another entity (e.g., the thread 305, the thread 307, or the process 303).

In an embodiment, the background thread may identify whether the checkpoint for the database 330 is required. In an embodiment, when the specified condition for executing the checkpoint operation is met, the background thread may identify whether the checkpoint for the database 330 is required.

In an embodiment, when it is identified that the checkpoint for the database 330 is required, the background thread may perform an attempt to obtain the lock of the database 330.

In an embodiment, when the attempt to obtain the lock of the database 330 fails, the background thread may wait for a specified time and may identify a checkpoint state again.

In an embodiment, when the attempt to obtain the lock of the database 330 succeeds, the background thread may perform the checkpoint for the database 330.

In an embodiment, when the attempt to obtain the lock of the database 330 fails, the background thread may release the lock for the database 330. In an embodiment, the background thread may wait for the specified time after releasing the lock for the database 330 and may identify a checkpoint state again.

In an embodiment, when the checkpoint for the database 330 succeeds, the background thread may release the lock for the database 330.

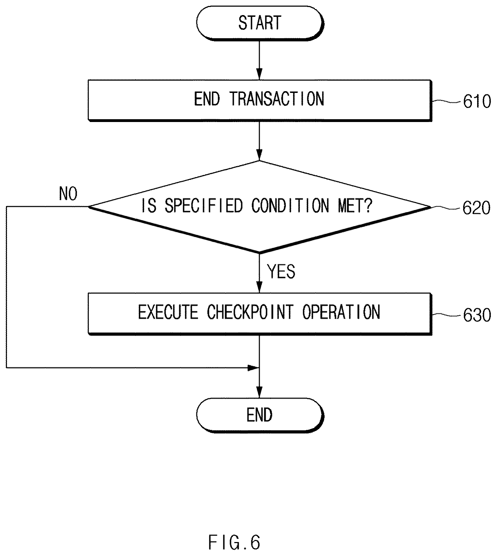

FIG. 6 is a flowchart illustrating a checkpoint operation of an electronic device 101 according to an embodiment.

Referring to FIG. 6, in operation 610, a processor 120 of the electronic device 101 may identify the ending of a transaction. In an embodiment, the processor 120 may identify the ending of the transaction for a database 330 associated with an application 146 through a thread 305 of a process 301. In an embodiment, the processor 120 may identify the ending of the transaction performed through the thread 305.

In operation 620, the processor 120 may determine whether a specified condition is met. In an embodiment, the processor 120 may determine whether the specified condition for executing a checkpoint operation is met. In an embodiment, the processor 120 may determine whether the specified condition for executing the checkpoint operation is met through the thread 305.

In an embodiment, the specified condition for executing the checkpoint operation may be that the ended transaction is a write transaction. In an embodiment, the specified condition for executing the checkpoint operation may be that there is no another transaction (e.g., a write transaction and/or a read transaction) except for the ended transaction. In an embodiment, the specified condition for executing the checkpoint operation may be that there is no transaction of another process 303 associated with the database 330 and transaction of another thread 307. In an embodiment, the specified condition for executing the checkpoint operation may be that the size of a WAL file 350 is greater than a specified threshold size (e.g., 1 MB). In an embodiment, the specified condition for executing the checkpoint operation may be that the available capacity of a memory 130 is less than or equal to a specified capacity. In an embodiment, the specified condition for executing the checkpoint operation may be that the rate of the available capacity of the memory 130 is less than or equal to a specified rate. However, the above-mentioned conditions are merely illustrative, and various conditions may be added according to an execution environment of the electronic device 101.

In an embodiment, the specified condition for executing the checkpoint operation may be set according to a size of a free space of the memory 130 (e.g., storage). For example, when the free space of the memory 130 is greater than a specified size or rate, the specified condition for executing the checkpoint operation may be that the ended transaction is a write transaction. In an embodiment, when the free space of the memory 130 is less than the specified size or rate, the specified condition for executing the checkpoint operation may be that there is no transaction of the other process 303 associated with the database 330 and transaction of the other thread 307.

When the specified condition is met in operation 620 ("YES"), the processor 120 may perform operation 630. When the specified condition is not met in operation 620 ("NO"), the processor 120 may end the operation according to FIG. 6.

In operation 630, the processor 120 may execute a checkpoint operation. In an embodiment, the processor 120 may execute the checkpoint operation through the thread 305.

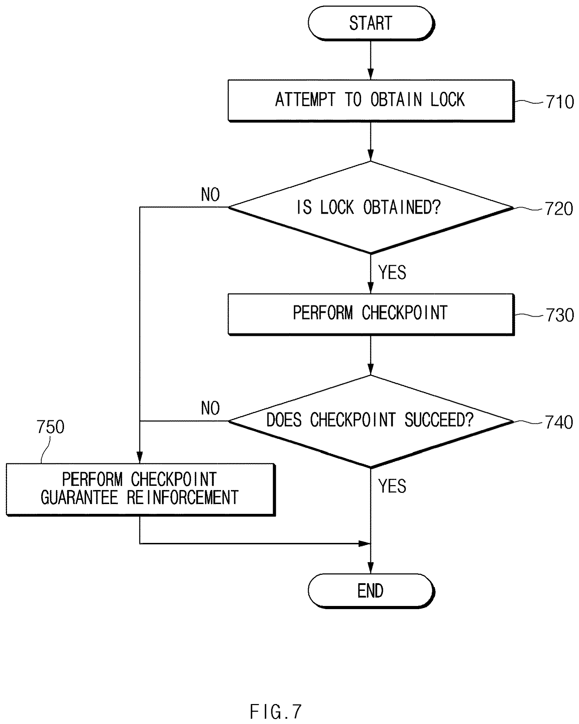

FIG. 7 is a detailed flowchart of a checkpoint operation according to an embodiment. In an embodiment, operations of FIG. 7 may be included in operation 630 of FIG. 6.

Referring to FIG. 7, a processor 120 may perform an attempt to obtain a lock (e.g., an exclusive lock) for a database 330 through a thread 305. In an embodiment, the processor 120 may perform the attempt to obtain the lock of the database 330 during a specified time (100 msec) through the thread 305.

In an embodiment, when another entity (e.g., a thread 307 or a process 303) releases any lock (e.g., a shared lock, an exclusive lock, a WAL write lock, a reservation lock, or a pending lock) for the database 330, the processor 120 may obtain the lock of the database 330 through the thread 305. In an embodiment, when the other entity (e.g., the thread 307 or the process 303) does not release any lock for the database 330, the processor 120 may fail to obtain the lock of the database 330 through the thread 305.

In operation 720, the processor 120 may determine whether the lock is obtained. In an embodiment, the processor 120 may determine whether the thread 305 obtains the lock for the database 330.

When the thread 305 obtains the lock for the database 330 in operation 720 ("YES"), the processor 120 may perform operation 730. When the thread 305 does not obtain the lock for the database 330 in operation 720 ("NO"), the processor 120 may perform operation 750.

In operation 730, the processor 120 may perform a checkpoint for the database 330 through the thread 305. In an embodiment, while performing the checkpoint, the processor 120 may update pages 412, 413, 414, and 415 of the database 330 based on frames 460, 470, 480, and 490 of a WAL file 350 through the thread 305.

In operation 740, the processor 120 may determine whether the thread 305 succeeds in the checkpoint.

When the thread 305 succeeds in the checkpoint ("YES") in operation 740, the processor 120 may end the operation according to FIG. 7. When the thread 305 does not succeed in operation 720 ("NO"), the processor 120 may perform operation 750.

In operation 740, the processor 120 may perform a checkpoint guarantee reinforcement operation. In an embodiment, the processor 120 may perform the checkpoint guarantee reinforcement operation by changing a specified condition for executing a checkpoint operation. In an embodiment, the processor 120 may perform the checkpoint guarantee reinforcement operation by increasing a time to perform an attempt to obtain a lock.

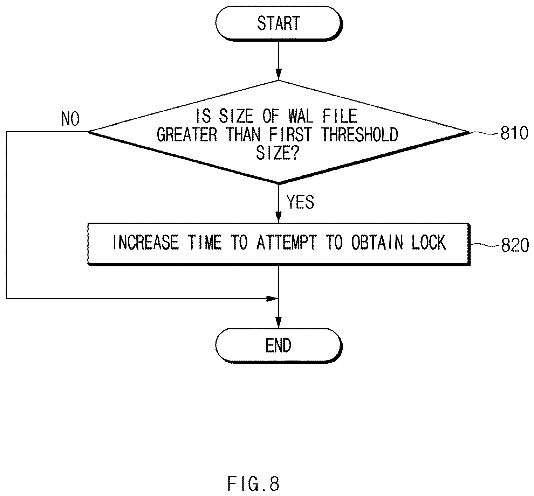

FIG. 8 is a flowchart illustrating a checkpoint guarantee reinforcement operation according to an embodiment. In an embodiment, operations of FIG. 8 may be included in operation 750 of FIG. 7.

Referring to FIG. 8, in operation 810, a processor 120 may determine whether the size of a WAL file 350 is greater than a first threshold size (e.g., 1 GB). In an embodiment, the first threshold size may be adaptively set according to a capacity of a memory 130.

When the size of the WAL file 350 is greater than a first threshold size (e.g., 1 GB) in operation 810 ("YES"), the processor 120 may perform operation 820. When the size of the WAL file 350 is not greater than the first threshold size (e.g., 1 GB) in operation 810 ("NO"), the processor 120 may perform the operations according to FIG. 8.

In operation 820, the processor 120 may increase a time (e.g., a timeout time) to perform an attempt to obtain a lock. In an embodiment, the processor 120 may increase the time to perform the attempt to obtain the lock by a specified reference time (e.g., 100 msec). In an embodiment, the processor 120 may adaptively increase the time to perform the attempt to obtain the lock in proportion to the size of the WAL file 350. In an embodiment, the processor 120 may adaptively increase the time to perform the attempt to obtain the lock based on the available capacity of the memory 130.

In an embodiment, the processor 120 may perform a plurality of attempts during the time (e.g., the timeout time) to perform the attempt to obtain the lock. For example, the processor 120 may perform an attempt to obtain a lock at intervals of a specified time (e.g., 20 msec) to obtain the lock. In an embodiment, the intervals of the specified time may be shorter than the time (e.g., the timeout time) to perform the attempt.

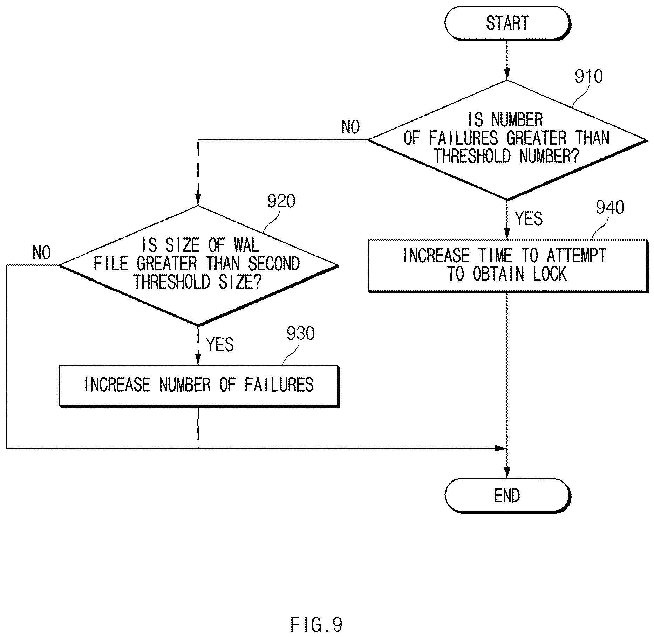

FIG. 9 is a flowchart illustrating a checkpoint guarantee reinforcement operation according to an embodiment. In an embodiment, operations of FIG. 9 may be included in operation 750 of FIG. 7.

Referring to FIG. 9, in operation 910, a processor 120 may determine whether the number of failures is greater than a threshold number (e.g., 100). In an embodiment, the threshold number may be adaptively set according to a capacity of a memory 130.

When the number of the failures is greater than the threshold number (e.g., 100) in operation 910, the processor 120 may perform operation 940. When the number of the failures is not greater than the threshold number (e.g., 100) in operation 910, the processor 120 may perform operation 920.

In operation 920, the processor 120 may determine whether the size of a WAL file 350 is greater than a second threshold size (e.g., 100 MB). In an embodiment, the second threshold size may be adaptively set according to the capacity of the memory 130.

When the size of the WAL file 350 is greater than the second threshold size (e.g., 100 MB) in operation 920 ("YES"), the processor 120 may perform operation 930. When the size of the WAL file 350 is not greater than the second threshold size (e.g., 100 MB) in operation 920 ("NO"), the processor 120 may end the operations according to FIG. 9.

In operation 930, the processor 120 may increase the number of the failures. In an embodiment, the processor 120 may increase the number of the failures by 1.

In operation 940, the processor 120 may increase a time to perform an attempt to obtain a lock. In an embodiment, the processor 120 may increase the time to perform the attempt to obtain the lock by a specified reference time (e.g., 100 msec). In an embodiment, the processor 120 may adaptively increase the time to perform the attempt to obtain the lock in proportion to the size of the WAL file 350. In an embodiment, the processor 120 may adaptively increase the time to perform the attempt to obtain the lock based on the available capacity of the memory 130.

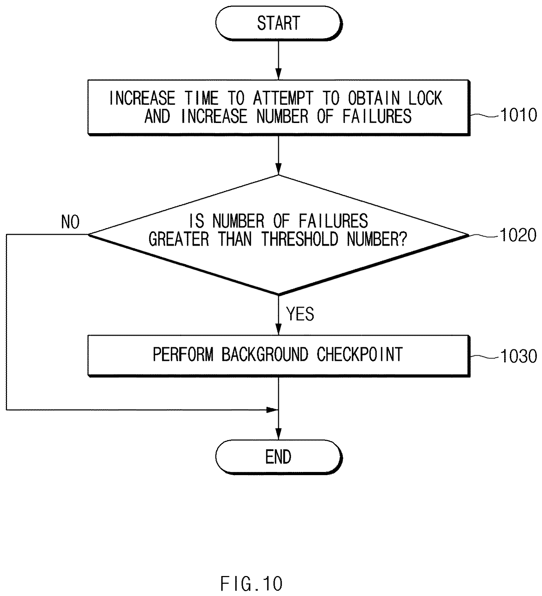

FIG. 10 is a flowchart illustrating a checkpoint guarantee reinforcement operation according to an embodiment. In an embodiment, operations of FIG. 10 may be included in operation 750 of FIG. 7.

Referring to FIG. 10, in operation 1010, a processor 120 may increase a time to perform an attempt to obtain a lock and may increase the number of failures.

in operation 1020, the processor 120 may determine whether the number of the failures is greater than a threshold number (e.g., 100). In an embodiment, the threshold number may be adaptively set according to a capacity of a memory 130. In an embodiment, the threshold number of FIG. 10 may be the same as or different from a threshold number of FIG. 9.

When the number of the failures is greater than the threshold number (e.g., 100) in operation 1020 ("YES"), the processor 120 may perform operation 1030. When the number of the failures is not greater than the threshold number (e.g., 100) in operation 1020 ("NO"), the processor 120 may end the operation according to FIG. 10.

In operation 1030, the processor 120 may perform a background checkpoint. In an embodiment, the processor 120 may perform a checkpoint through another thread distinguished from a thread 305. In an embodiment, the processor 120 may perform the background checkpoint by generating a dedicated checkpoint thread.

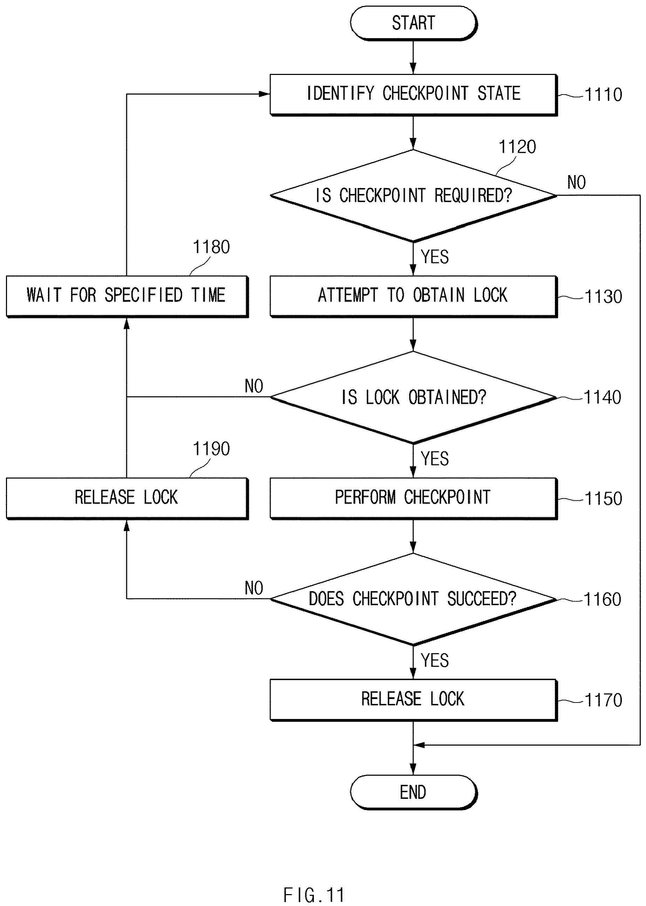

FIG. 11 is a flowchart illustrating a checkpoint guarantee reinforcement operation according to an embodiment. In an embodiment, operations of FIG. 11 may be included in operation 1030 of FIG. 10.

Referring to FIG. 11, in operation 1110, a processor 120 may identify a checkpoint state through a background thread. In an embodiment, the processor 120 may identify whether a checkpoint is performed for a database 330 by another entity (e.g., a thread 305, a thread 307, or a process 303) through the background thread.

In operation 1120, the processor 120 may determine whether the checkpoint is required through the background thread.

In an embodiment, when a specified condition for executing a checkpoint operation is met, the processor 120 may identify that the checkpoint for the database 330 is required. In an embodiment, when the size of a WAL file 350 is greater than a specified threshold size (e.g., 1 MB), the processor 120 may identify that the checkpoint for the database 330 is required.

When it is determined that the checkpoint is required in operation 1120 ("YES"), the processor 120 may perform operation 1130 through the background thread. When it is determined that the checkpoint is not required in operation 1120 ("NO"), the processor 120 may end the operation according to FIG. 11. In an embodiment, when it is determined that the checkpoint is not required, the processor 120 may end the background thread.

In operation 1130, the processor 120 may perform an attempt to obtain a lock through the background thread. In an embodiment, the processor 120 may perform the attempt to obtain the lock during a reference time through the background thread.

In operation 1140, the processor 120 may determine whether the background thread obtains a lock for the database 330.

When the background thread obtains the lock for the database 330 in operation 1140 ("YES"), the processor 120 may perform operation 1150 through the background thread. When the background thread does not obtain the lock for the database 330 in operation 1140 ("NO"), the processor 120 may perform operation 1180 through the background thread.

In operation 1150, the processor 120 may perform a checkpoint through the background thread. In an embodiment, the processor 120 may perform a checkpoint (e.g., truncate) such that the size of the WAL file 350 is less than or equal to a specified size through the background thread.

In operation 1160, the processor 120 may determine whether the checkpoint succeeds.

When the checkpoint succeeds in operation 1160 ("YES"), the processor 120 may perform operation 1170 through the background thread. When the checkpoint does not succeed in operation 1140 ("NO"), the processor 120 may perform operation 1190 through the background thread.

In operation 1170, the processor 120 may release the lock for the database 330 through the background thread. In an embodiment, when the lock for the database 330 is released, the processor 120 may end the background thread.

In operation 1180, the processor 120 may wait for a specified time. In an embodiment, the processor 120 may instruct the background thread to wait for the specified time.

In an embodiment, the processor 120 may perform operation 1110 again after waiting for the specified time.

In operation 1190, the processor 120 may release the lock for the database 330 through the background thread. After releasing the lock for the database 330 through the background thread, the processor 120 may perform operation 1180.

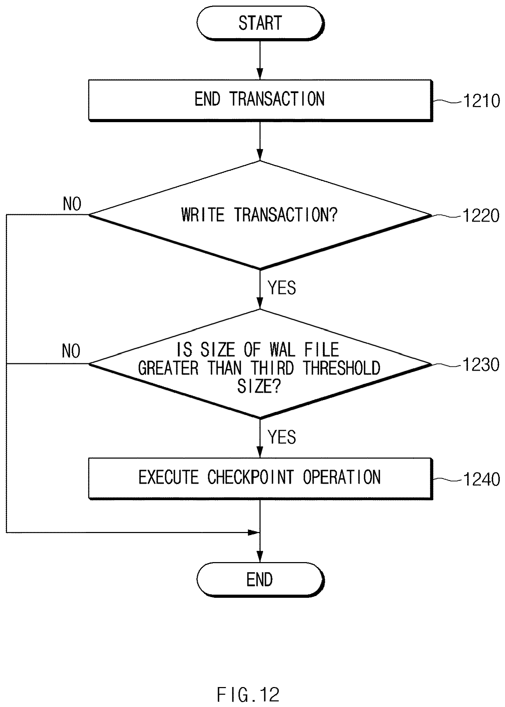

FIG. 12 is a flowchart illustrating a checkpoint operation according to an available capacity of a memory 130 of an electronic device 101 according to an embodiment. In an embodiment, operations of FIG. 12 may correspond to operation 610 of FIG. 6. In an embodiment, operations 1220 and 1230 of FIG. 12 may be included in operation 620 of FIG. 6. In an embodiment, operation 1240 of FIG. 12 may correspond to operation 630 of FIG. 6.

In an embodiment, when the available capacity of the memory 130 is present greater than or equal to a specified size, operations according to FIG. 12 may be performed. In an embodiment, when the available capacity of the memory 130 is present greater than or equal to a specified rate, the operations according to FIG. 12 may be performed.

Referring to FIG. 12, in operation 1210, a processor 120 may identify the ending of a transaction.

In operation 1220, the processor 120 may determine whether the ended transaction is a write transaction. In an embodiment, the processor 120 may determine whether the ended transaction is the write transaction through a thread 305.

When the ended transaction is the write transaction in operation 1220 ("YES"), the processor 120 may perform operation 1230. When the ended transaction is not the write transaction in operation 1220 ("NO"), the processor 120 may end the operations according to operation 12.

In operation 1230, the processor 120 may determine whether a size of a WAL file 350 is greater than a third threshold size (e.g., a threshold size (e.g., 1 MB)). In an embodiment, the processor 120 may determine whether the size of the WAL file 350 is greater than the third threshold size (e.g., the threshold size) through the thread 305.

When the size of the WAL file 350 is greater than the third threshold size (e.g., the threshold size) in operation 1230 ("YES"), the processor 120 may perform operation 1240. When the size of the WAL file 350 is not greater than the third threshold size (e.g., the threshold size) in operation 1220 ("NO"), the processor 120 may perform the operations according to operation 12.

In operation 1240, the processor 120 may execute a checkpoint operation. In an embodiment, the processor 120 may execute the checkpoint operation through the thread 305.

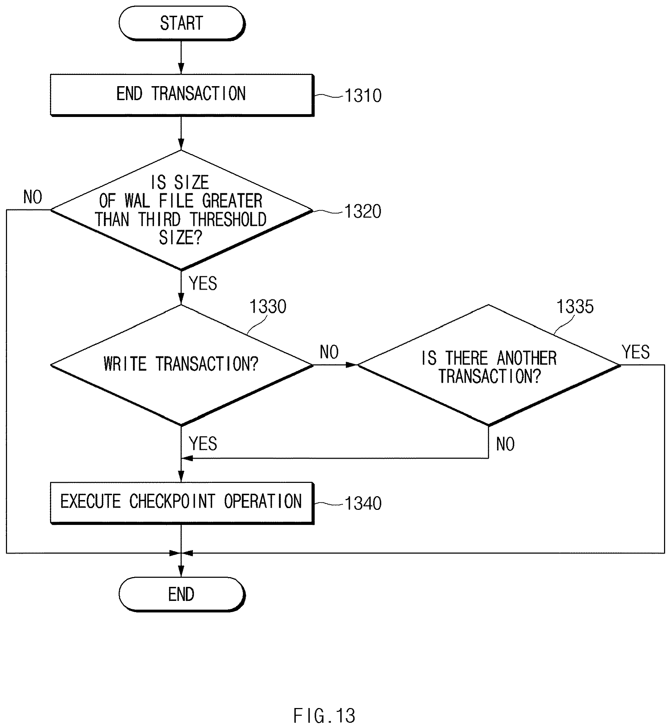

FIG. 13 is a flowchart illustrating a checkpoint operation according to an available capacity of a memory 130 of an electronic device 101 according to an embodiment. In an embodiment, operation 1310 of FIG. 13 may correspond to operation 610 of FIG. 6. In an embodiment, operations 1320, 1330, and 1335 of FIG. 13 may be included in operation 620 of FIG. 6. In an embodiment, operation 1340 of FIG. 13 may correspond to operation 630 of FIG. 6.

In an embodiment, when the available capacity of the memory 130 is present less than a specified size, operations according to FIG. 13 may be performed. In an embodiment, when the available capacity of the memory 130 is present less than a specified rate, the operations according to FIG. 13 may be performed.

Referring to FIG. 13, in operation 1310, a processor 120 may identify the ending of a transaction.

In operation 1320, the processor 120 may determine whether a size of a WAL file 350 is greater than a third threshold size (e.g., a threshold size (e.g., 1 MB)). In an embodiment, the processor 120 may determine whether the size of the WAL file 350 is greater than the third threshold size (e.g., the threshold size) through a thread 305.

When the size of the WAL file 350 is greater than the third threshold size (e.g., the threshold size) in operation 1320 ("YES"), the processor 120 may perform operation 1330. When the size of the WAL file 350 is not greater than the third threshold size (e.g., the threshold size) in operation 1320 ("NO"), the processor 120 may end the operations according to operation 13.

In operation 1330, the processor 120 may determine whether the ended transaction is a write transaction. In an embodiment, the processor 120 may determine whether the ended transaction is the write transaction through the thread 305.

When the ended transaction is the write transaction in operation 1330 ("YES"), the processor 120 may perform operation 1340. When the ended transaction is not the write transaction in operation 1330 ("NO"), the processor 120 may perform operation 1335.

In operation 1335, the processor 120 may identify whether there is another transaction. In an embodiment, the processor 120 may identify whether there is a transaction for execution in a database 330 through another entity (e.g., a thread 307 or a process 303).

When there is the other transaction in operation 1335 ("YES"), the processor 120 may end the operations according to operation 13. When there is no other transaction in operation 1335 ("NO"), the processor 120 may perform operation 1340. For example, when there is no other transaction (another rear transaction and/or another write transaction) except for a read transaction which is currently operating in operation 1335 ("NO"), the processor 120 may perform operation 1340 (a checkpoint operation).

In operation 1340, the processor 120 may execute the checkpoint operation. In an embodiment, the processor 120 may execute the checkpoint operation through the thread 305.

An electronic device 101 according to an embodiment may include a memory (e.g., a non-volatile memory 134) storing a database 330, a journal file (e.g., a WAL file 350) for the database 330, and instructions, and a processor 120 electrically connected with the memory. The instructions may be configured to, when executed by the processor 120, cause the electronic device 101 to record the result of processing a transaction in the journal file through a thread 305 of a process 301 associated with the database 330, identify a size of the journal file through the thread 305, perform a lock for the journal file during a reference time through the thread 305, based on the identified result, and transfer the result of processing the transaction, which is recorded in the journal file, to the database 330 through the thread 305, in response to success of the lock for the journal file.

In an embodiment, the instructions may be configured to, when executed by the processor 120, cause the electronic device 101 to increase the reference time by a set time, based on whether an attempt to perform the lock for the journal file during the reference time fails.

In an embodiment, the instructions may be configured to, when executed by the processor 120, cause the electronic device 101 to increase the reference time by the set time, in response to failure of the attempt to perform the lock for the journal file during the reference time and a size of the journal file being greater than or equal to a first reference size.

In an embodiment, the instructions may be configured to, when executed by the processor 120, cause the electronic device 101 to initialize the reference time, in response to transferring the result of processing the transaction, which is recorded in the journal file, to the database 330.

In an embodiment, the instructions may be configured to, when executed by the processor 120, cause the electronic device 101 to increase the number of failures by the set number, in response to failure of the attempt to perform the lock for the journal file during the reference time, and increase the reference time by a set time, in response to the number of the failures being greater than or equal to a reference failure number.

In an embodiment, the instructions may be configured to, when executed by the processor 120, cause the electronic device 101 to identify whether there is a transaction except for the transaction and perform a lock for the journal file during a reference time through the thread 305, based on the identified result.

In an embodiment, the instructions may be configured to, when executed by the processor 120, cause the electronic device 101 to transfer the result of processing the transaction, which is recorded in the journal file, to the database 330 through the thread 305, such that a size of the journal file is less than or equal to a specified size.

In an embodiment, the instructions may be configured to, when executed by the processor 120, cause the electronic device 101 to increase the reference time by a set time and increase the number of failures by a set number, in response to failure of an attempt to perform the lock for the journal file during the reference time, and perform a lock for the journal file through another thread (e.g., a background thread) distinguished from the thread 305, in response to the number of the failures being greater than or equal to a reference failure number.

In an embodiment, the instructions may be configured to, when executed by the processor 120, cause the electronic device 101 to perform a lock for the journal file through the other thread, transfer the result of processing the transaction, which is recorded in the journal file, to the database 330 through the other thread, in response to success of the lock for the journal file, and release the lock for the journal file through the other thread.

In an embodiment, the transaction may be a write transaction.

An operation method of an electronic device 101 according to an embodiment may include recording the result of processing a transaction in a journal file (e.g., a WAL file 350) for a database 330 of the electronic device 101 through a thread 305 of a process 301 associated with the database 330, identifying a size of the journal file through the thread 305, performing a lock for the journal file during a reference time through the thread 305, based on the identified result, and transferring the result of processing the transaction, which is recorded in the journal file, to the database 330 through the thread 305, in response to success of the lock for the journal file.

The operation method according to an embodiment may include increasing the reference time by a set time, based on whether an attempt to perform the lock for journal file during the reference time fails.

The operation method according to an embodiment may include increasing the reference time by a set time, in response to failure of the attempt to perform the lock for the journal file during the reference time and a size of the journal file being greater than or equal to a first reference size.

The operation method according to an embodiment may include initializing the reference time, in response to transferring the result of processing the transaction, which is recorded in the journal file, to the database 330.

The operation method according to an embodiment may include increasing the number of failures by a set number, in response to failure of an attempt to perform the lock for the journal file during the reference time, and increasing the reference time by a set time, in response to the number of the failures being greater than or equal to a reference failure number.

The operation method according to an embodiment may include identifying whether there is a transaction except for the transaction and performing a lock for the journal file during a reference time through the thread 305, based on the identified result.

In an embodiment, the transferring to the database 330 may include transferring the result of processing the transaction, which is recorded in the journal file, to the database 330 through the thread 305, such that a size of the journal file is less than or equal to a specified size.

The operation method according to an embodiment may include increasing the reference time by a set time and increasing the number of failures by a set number, in response to failure of an attempt to perform the lock for the journal file during the reference time, and performing a lock for the journal file through another thread (e.g., a background thread) distinguished from the thread 305, in response to the number of the failures being greater than or equal to a reference failure number.

In an embodiment, the performing of the lock for the journal file through the other thread may include performing a lock for the journal file through the other thread, transferring the result of processing the transaction, which is recorded in the journal file, to the database 330 through the other thread, in response to success of the lock for the journal file, and releasing the lock for the journal file through the other thread.

The transaction in the operation method according to an embodiment may be a write transaction.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a memory storing a database, a journal file for the database, and instructions; and
a processor electrically connected with the memory,
wherein the instructions are configured to, when executed by the processor, cause the electronic device to:
record the result of processing a transaction in the journal file through a thread of a process associated with the database;
identify a size of the journal file through the thread;
perform a lock for the journal file during a reference time through the thread, based on the identified result; and
transfer the result of processing the transaction, the result being recorded in the journal file, to the database through the thread, in response to success of the lock for the journal file.

2. The electronic device of claim 1, wherein the instructions are configured to, when executed by the processor, cause the electronic device to:
increase the reference time by a set time, based on whether an attempt to perform the lock for the journal file during the reference time fails.

3. The electronic device of claim 2, wherein the instructions are configured to, when executed by the processor, cause the electronic device to:
increase the reference time by a set time, in response to failure of the attempt to perform the lock for the journal file during the reference time and a size of the journal file being greater than or equal to a first reference size.

4. The electronic device of claim 3, wherein the instructions are configured to, when executed by the processor, cause the electronic device to:
initialize the reference time, in response to transferring the result of processing the transaction, the result being recorded in the journal file, to the database.

5. The electronic device of claim 2, wherein the instructions are configured to, when executed by the processor, cause the electronic device to:
increase the number of failures by a set number, in response to failure of the attempt to perform the lock for the journal file during the reference time; and
increase the reference time by a set time, in response to the number of the failures being greater than or equal to a reference failure number.

6. The electronic device of claim 1, wherein the instructions are configured to, when executed by the processor, cause the electronic device to:
identify whether there is a transaction except for the transaction; and
perform a lock for the journal file during a reference time through the thread, based on the identified result.

7. The electronic device of claim 6, wherein the instructions are configured to, when executed by the processor, cause the electronic device to:
transfer the result of processing the transaction, the result being recorded in the journal file, to the database through the thread, such that a size of the journal file is less than or equal to a specified size.

8. The electronic device of claim 6, wherein the instructions are configured to, when executed by the processor, cause the electronic device to:
increase the reference time by a set time and increase the number of failures by a set number, in response to failure of an attempt to perform the lock for the journal file during the reference time; and
perform a lock for the journal file through another thread distinguished from the thread, in response to the number of the failures being greater than or equal to a reference failure number.

9. The electronic device of claim 8, wherein the instructions are configured to, when executed by the processor, cause the electronic device to:
perform a lock for the journal file through the other thread;
transfer the result of processing the transaction, the result being recorded in the journal file, to the database through the other thread, in response to success of the lock for the journal file; and
release a lock for the journal file through the other thread.

10. The electronic device of claim 1, wherein the transaction is a write transaction.

11. An operation method of an electronic device, the operation method comprising:
recording the result of processing a transaction in a journal file for a database of the electronic device through a thread of a process associated with the database;
identifying a size of the journal file through the thread;
performing a lock for the journal file during a reference time through the thread, based on the identified result; and
transferring the result of processing the transaction, the result being recorded in the journal file, to the database through the thread, in response to success of the lock for the journal file.

12. The operation method of claim 11, further comprising:
increasing the reference time by a set time, based on whether an attempt to perform the lock for journal file during the reference time fails.

13. The operation method of claim 12, further comprising:
increasing the reference time by a set time, in response to failure of the attempt to perform the lock for the journal file during the reference time and a size of the journal file being greater than or equal to a first reference size.

14. The operation method of claim 13, further comprising:
initializing the reference time, in response to transferring the result of processing the transaction, the result being recorded in the journal file, to the database.

15. The operation method of claim 12, further comprising:
increasing the number of failures by a set number, in response to failure of the attempt to perform the lock for the journal file during the reference time; and
increasing the reference time by a set time, in response to the number of the failures being greater than or equal to a reference failure number.
